# EUROPEAN PATENT APPLICATION

(11) **EP 3 974 311 A1**
(43) Date of publication of application: **30.03.2022**
(21) Application number: 20197887.1
(22) Date of filing: 23.09.2020
(51) Int. Cl.: B63H 20/00, B63H 20/28, B63H 20/32, B63H 21/17

(54) **AN OUTBOARD ENGINE ARRANGEMENT**

(71) Applicant: Yanmar Marine International B.V, 1332 BS Almere (NL)
(72) Inventor: BRUESTLE, Claus, 1332 BS Almere (NL)
(74) Representative: V.O.

(57) **Abstract**

The invention relates to an outboard engine arrangement, including an electric motor and an invertor for driving the electric motor. The electric motor has an output shaft for outboard propulsion. The engine arrangement further includes an enclosure enclosing a chamber that accommodates the electric motor and the invertor. The enclosure is sealed.

## Description

The invention relates to an outboard engine arrangement.

Outboard engines are widely known for propulsion of boats in fresh or offshore waters. Typically, gasoline or diesel fueled internal combustion engines are used to power an outboard engine. More recently, electric motors have been used to power outboard engine arrangements, in response to the increasing performance of rechargeable batteries and other electric power generation means, for example fuel cells, as well as by environmental needs. It is important to assure the safety and reliability of electric motors when used in an outboard engine, particularly where high power is required, for example higher than 100 kW. Substantial safety and reliability concerns arise due to the wet conditions that may occur in the outboard boat propulsion environment.

Therefore, it is an aim of the present invention to solve or alleviate one or more of the above-mentioned disadvantages. In particular, the invention aims at providing a safe and reliable outboard engine arrangement for electric outboard propulsion.

Thereto, according to an aspect of the invention, an outboard engine arrangement according to claim 1 is provided. The arrangement may comprise an electric motor having an output shaft in mechanical communication with a propeller for outboard propulsion, and an invertor for converting DC to AC and for driving the electric motor, the engine arrangement further comprising an enclosure enclosing a chamber that accommodates the electric motor and the invertor, wherein the enclosure is sealed.

By providing a sealed, enclosed chamber that accommodates an electric motor and an invertor, collectively referred to as an "engine arrangement", atmospheric conditions in the chamber can be maintained in stable conditions, e.g. in terms of humidity requirements, thereby counteracting that any undesired electric phenomena such as creeping currents or voltage breakthrough occurs, both during operation and when the engine is switched off, thus realizing an inherently safe and reliable outboard engine arrangement.

The invention is at least partly based on the insight that an electric motor does not consume air or other gas mixtures for operation, contrary to conventional combustion motors. This characteristic may be effectively exploited by application of a sealed enclosure to maintain dry atmospheric conditions in the chamber.

The sealed enclosure can be liquid tight and/or gas tight as specified in claim 2 so as to prevent any moisture and/or moistened gas from entering the chamber.

Advantageously, some embodiments of the outboard engine arrangement include an adapter plate supporting both the electric motor and the invertor as specified in claim 3, forming at least a portion of the sealed enclosure. As specified in claim 4, the outboard engine arrangement may also include a cowling forming a top cover of the chamber. As defined in claim 5, the adapter plate and the cowling may form the sealed enclosure. It is noted that the sealed enclosure may include a further module, e.g. an intermediate portion that is mounted between and/or sealed with the cowling and the adapter plate. It is further noted that at least the electric motor and/or the invertor may be mounted to the adapter plate. In yet a further embodiment, the electric motor and/or the invertor are mounted to a top side of the adapter plate, the cowling then forming a top cover of the chamber.

Preferably, the cowling is mounted to the adapter plate in a sealed fit, e.g. by receiving an edge of the cowling in a corresponding groove of the adapter plate as specified in claim 6, e.g. using a formed rubber seal between cowling edge and adapter plate groove, thereby providing an outboard engine arrangement that can be simply assembled and de-assembled if the cowling is removable, e.g. for inspection and/or maintenance purposes.

The cowling can be formed as a one piece shell as defined in claim 7, e.g. by application of an injection molding, blow molding, thermoforming process or alike. Alternatively, the cowling can be composed from multiple modules. Further, the cowling can be removably mounted on the adapter plate as specified in claim 8.

If desired, the cowling may include an inspection window for visually inspecting the interior of the chamber as specified in claim 9, e.g. to inspect electric power lines connected to the invertor and/or the electric motor.

An outboard engine arrangement according to claim 10 or 11 may be provided. The sealed enclosure may include one or more sealed, fluid tight input ports for passage into the enclosure of electric power lines connected to the invertor, e.g. using a cable connector box mounted in or on said enclosure, e.g. at a bottom side of the adapter plate with appropriate seals. Similarly, an outboard engine arrangement according to claim 12 and/or 13 may be provided. Here, the enclosure might include one or more sealed, fluid tight output ports for the electric motor shaft, and/or a cooling liquid interface for exchanging cooling liquid in a fluid tight manner towards and from the chamber accommodating the electric motor and the invertor.

Generally, the sealed enclosure may be provided, e.g. via the adapter plate and/or the cowling, with interface structures functionally providing a sealed access of electric power, a sealed output of torque power and/or a sealed cooling liquid exchange for reliable and dry operation of the electric motor and invertor.

In some embodiments, the invertor is supported by the adapter plate, e.g. via a supporting bracket, and/or has a tilted orientation relative to the electric motor. In other embodiments, however the invertor may have another position and/or orientation, e.g. mainly parallel to the electric motor or mainly parallel to the adapter plate, e.g. depending on its size. Further, other orientations and positions are applicable, e.g. on top of the electric motor.

The adapter plate may have a standardized footprint for modular construction, implementing a flexible design wherein a universal adapter plate can be applied for a variety of electric motor types each having a same or similar cross sectional size but different axial dimension, e.g. depending on power characteristics.

Thus are disclosed at least the following numbered embodiments:
1. An outboard engine arrangement, comprising an electric motor having an output shaft for outboard propulsion, and an invertor for driving the electric motor, the engine arrangement further comprising an enclosure enclosing a chamber that accommodates the electric motor and the invertor, wherein the enclosure is sealed.
2. An outboard engine arrangement according to embodiment 1, wherein the sealed enclosure is fluid tight and/or gastight.
3. An outboard engine arrangement according to any of the preceding embodiments, wherein the sealed enclosure further includes an adapter plate supporting the electric motor and the invertor.
4. An outboard engine arrangement according to any of the preceding embodiments, wherein the sealed enclosure includes a cowling forming a top cover of the chamber.
5. An outboard engine arrangement according to embodiment 4, wherein the cowling is mounted to the adapter plate, the cowling and the adapter plate forming the sealed enclosure.
6. An outboard engine arrangement according to embodiment 5, wherein the adapter plate includes a groove receiving a bottom edge of the cowling.
7. An outboard engine arrangement according to any of the preceding embodiments 4-6, wherein the cowling is formed as a one piece shell.
8. An outboard engine arrangement according to any of the preceding embodiments 4-7, wherein the cowling is removably mounted on the adapter plate.
9. An outboard engine arrangement according to any of the preceding embodiments 4-8, wherein the cowling includes a fluid tight inspection window for inspecting electrical lines and/or liquid cooling lines in the chamber.
10. An outboard engine arrangement according to any of the preceding embodiments, wherein the sealed enclosure is provided with input ports for fluid tight passage by electric power lines connected to the invertor.
11. An outboard engine arrangement according to embodiment 10, wherein the electric power lines are arranged for transporting more than about 100 kW electric power.
12. An outboard engine arrangement according to any of the preceding embodiments, wherein the sealed enclosure is provided with an output port for fluid tight passage of the electric motor output shaft.
13. An outboard engine arrangement according to any of the preceding embodiments, wherein the sealed enclosure is provided with a cooling liquid interface for exchanging cooling liquid in a fluid tight manner.
14. An outboard engine arrangement according to any of the preceding embodiments, wherein at least one invertor has a tilted orientation relative to the electric motor.
15. An outboard engine arrangement according to any of the preceding embodiments 3-14, wherein the adapter plate includes a standardized footprint for modular construction.

Further advantageous embodiments according to the invention are described in the following claims.

It should be noted that the technical features described above or below may each on its own be embodied in an outboard engine arrangement, i.e. isolated from the context in which it is described, separate from other features, or in combination with only a number of the other features described in the context in which it is disclosed. Each of these features may further be combined with any other feature disclosed, in any combination.

The invention will be further elucidated on the basis of exemplary embodiments which are represented in the drawings. The exemplary embodiments are given by way of non-limiting illustration of the invention. In the drawings:
Fig. 1 shows a schematic side view of an outboard engine arrangement according to an aspect;
Fig. 2 shows a schematic bottom view of an adapter plate of the outboard engine arrangement shown in Fig. 1;
Fig. 3A shows a schematic cross-sectional view of a cable connector box mounted on the adapter plate shown in Fig. 2;
Fig. 3B shows a schematic cross-sectional view of a cable pin of the cable connector box shown in Fig. 3A;
Fig. 3C shows a schematic side view of a mounting element shown in Fig. 3A;
Fig. 4 shows a schematic cross-sectional view of a coupler for coupling an output shaft of an electric motor of the outboard engine arrangement shown in Fig. 1 to a transmission input drive shaft;
Fig. 5 shows a schematic cross-sectional side view of another outboard engine arrangement according to an aspect;
Fig. 6 shows a schematic perspective view of yet another outboard engine arrangement according to an aspect;
Fig. 7 shows a schematic bottom view of an electric motor in the outboard engine arrangement shown in Fig. 6;
Fig. 8 shows a first schematic partial cross sectional side view of the outboard engine arrangement shown in Fig. 6;
Fig. 9A shows a second schematic partial cross sectional side view of the outboard engine arrangement shown in Fig. 1, and
Fig. 9B shows a first schematic partial cross sectional bottom view of the outboard engine arrangement shown in Fig. 9A.

In the figures identical or corresponding parts are represented with the same reference numerals. The drawings are only schematic representations of embodiments of the invention, which are given by manner of non-limited examples.

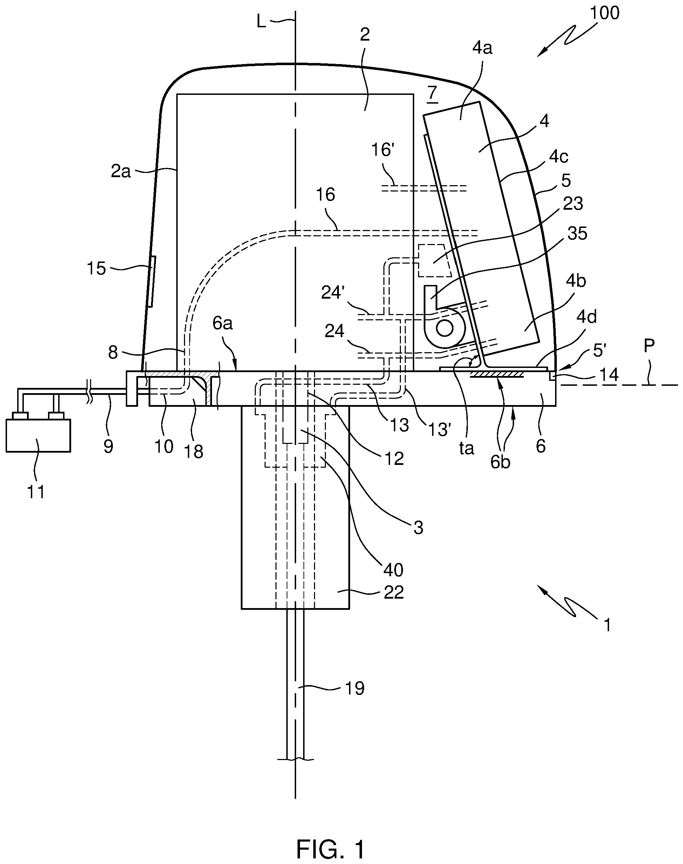

Figure 1 shows a schematic side view of an outboard engine arrangement 1 according to one embodiment. The illustrated arrangement 1 comprises an electric motor 2 having an output shaft 3 for outboard propulsion, and an invertor 4 for driving the electric motor 2. The electric motor 2 may for example be an AC motor, such as a permanent-magnet synchronous motor, PMSM. However, other electric motor types including AC motors, such as an asynchronous or induction motor, may also be used.

The invertor 4 is arranged for converting a direct current, fed from a DC power source 11, into driving currents fed to the AC motor 2 to control operation of the motor 2 including controlling a rotational speed of the output shaft 3. The DC power source 11 may be or include, but is not limited to, a battery, for example a lithium-ion battery and/or or a fuel cell, such as a hydrogen fuel cell. The output shaft 3 of the electric motor 2 may have a speed in a range from about 2000 to about 3000 revolutions per minute, RPM, or less, e.g. about 1800 RPM. Alternatively, the output shaft 3 may have a higher speed, e.g. about 4000, about 5000, or about 6000 RPM. In some embodiments, even higher output shaft speeds may be possible, e.g. about 7000 or 8000 RPM. Furthermore, the electric motor 2 may have a maximum power in a range of about 100 kW to about 1000 kW, such as about 150 kW, about 300 kW, or about 500 kW. The DC power source may be arranged to deliver any suitable current and voltage, for example a 500-600 Ampere DC feeding current at a 500-800 Volt feeding voltage.

The illustrated engine arrangement 1 further comprises an enclosure 100 comprising a cowling 5 and an adapter plate 6 enclosing a chamber 7 that accommodates the electric motor 2 and the invertor 4. The enclosure 100 is typically sealed, for example the cowling 5 and adapter plate 6 may be sealed to each other.

Preferably, the sealed enclosure 100 is fluid tight, liquid tight and/or gastight. Such a fluid tight, liquid and/or gas tight enclosure 100 is especially advantageous for high-power electric motors, in order to minimize, prevent in whole or part, or counteract undesirable electrical phenomena including but not limited to short-circuits, arcing, creep current phenomena and the like, that may occur in an electrical system in the presence of water, another liquid, moistened air, or gas.

As noted above, the enclosure of the outboard engine arrangement 1 shown in Fig. 1 includes an adapter plate 6 that supports the electric motor 2 as well as the invertor 4. The adapter plate 6 may be formed from a metal or metals, e.g. using a sandcasting process, another casting process or an alternative technique. Generally, the adapter plate 6 is a predominantly flat or planar structure having a top side or top surface 6a and a bottom side or bottom surface 6b opposite to the top surface 6a. In the illustrated embodiment, the electric motor 2 is mounted on the top surface 6a of the adapter plate 6 such that the output shaft 3 is oriented substantially transverse to the generally planar orientation of the adapter plate 6. In other words, a longitudinal axis L of the output shaft 3 is oriented mainly transverse to a plane P defined by a surface of the adapter plate 6 or wherein the adapter plate 6 extends. The illustrated motor 2 is substantially cylindrical, having a mainly circular exterior contour 2a that can be concentric with the output shaft 3. Other exterior motor contours, including but not limited to square, rectangular or irregular exterior contours, are within the scope of the disclosure. The outboard engine arrangement 1 further includes a coupler 40 coupling the output shaft 3 of the electric motor 2 to a driving shaft 19. In some embodiments, the coupler 40 is in sealed engagement with the output shaft 3. Further, the outboard engine arrangement 1 may include a heat exchanger 22 arranged below the adapter plate and, in some embodiments, positioned concentrically around the output shaft 3.

In the embodiment shown in Fig. 1, the motor 2 and the invertor 4 are located next to each other on the top surface 6a of the adapter plate 6, the invertor 4 having a mainly boxed shaped contour 4c with a slightly tilted orientation relative to adapter plate 6 and the electric motor 2. Specifically, in the illustrated embodiment the invertor 4 is tilted towards the motor 2 such that a top 4a of the invertor 4 is closer to the motor 2 than bottom 4b of the invertor 4, thereby efficiently exploiting the volume inside the chamber 7. The invertor 4 has a tilt angle (ta) relative to the plane P defined by a surface of the adapter plate 6 or wherein the adapter plate 6 extends, the tilt angle being in a range from about 10 degrees to about 89 degrees, e.g. about 10 degrees, about 20 degrees, about 30 degrees, about 40 degrees, about 45 degrees, about 50 degrees, about 60 degrees, about 70 degrees, about 80 degrees or about 85 degrees. The outboard engine arrangement 1 further includes a bracket 4d mounted to the adapter plate 6 supporting the invertor 4. However, the invertor may be supported by the adapter plate 6 in another way, for example by directly mounting the invertor 4 to the adapter plate 6. The outboard engine arrangement 1 may also include a pump unit 35 for circulating a cooling liquid for cooling the invertor 4 and/or the motor 2. In the illustrated embodiment, the pump unit 35 is arranged inside the chamber 7. In certain embodiments, the pump unit 35 is located between the motor 2 and the invertor 4, near the bottom 4b of the invertor 4, thereby providing an outboard engine arrangement 1 with densely arranged components enabling a compact overall design. The pump unit 35 may be electrically driven. Further, a cooling expansion volume 23 can be provided in the chamber 7 for the expansion of heat transfer or cooling fluid as described below.

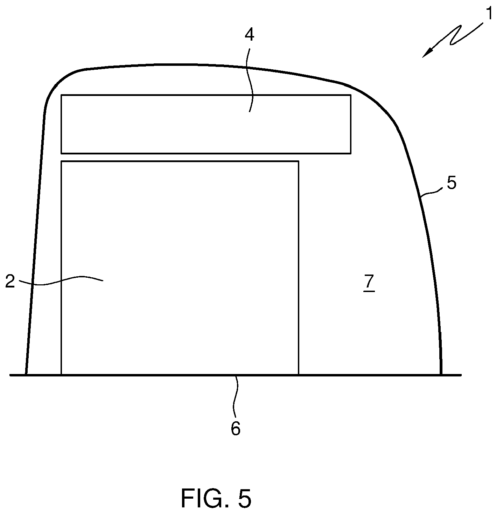

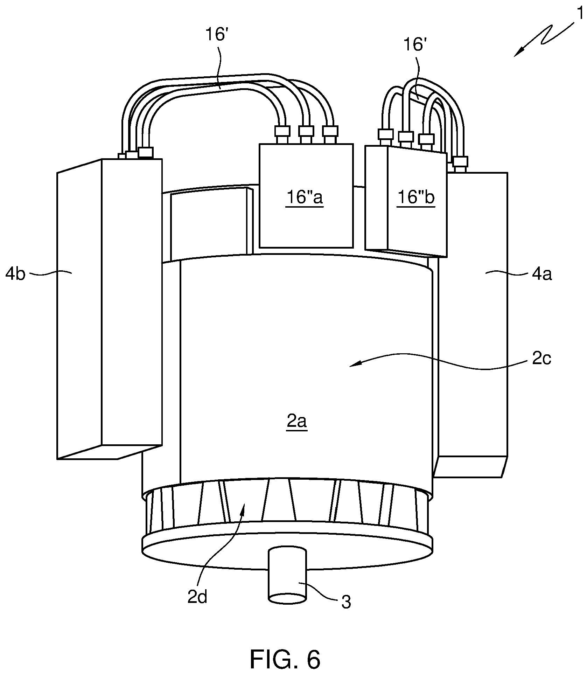

The invertor 4 may have any desired orientation that fits within the chamber 7. For example, as noted above, the inverter for may be positioned at an alternative tilt angle ta or be positioned mainly parallel to the longitudinal axis L of the motor output shaft 3. Alternatively, the invertor 4 may be oriented mainly parallel to the adapter plate 6, with the long side of the box-shaped contour 4c mainly parallel to the plane P defined by the adapter plate 6. Further, the invertor 4 may have another location as described below in more detail referring to Fig. 5 and Fig. 6, including but not limited to a position on top or next to the electric motor.

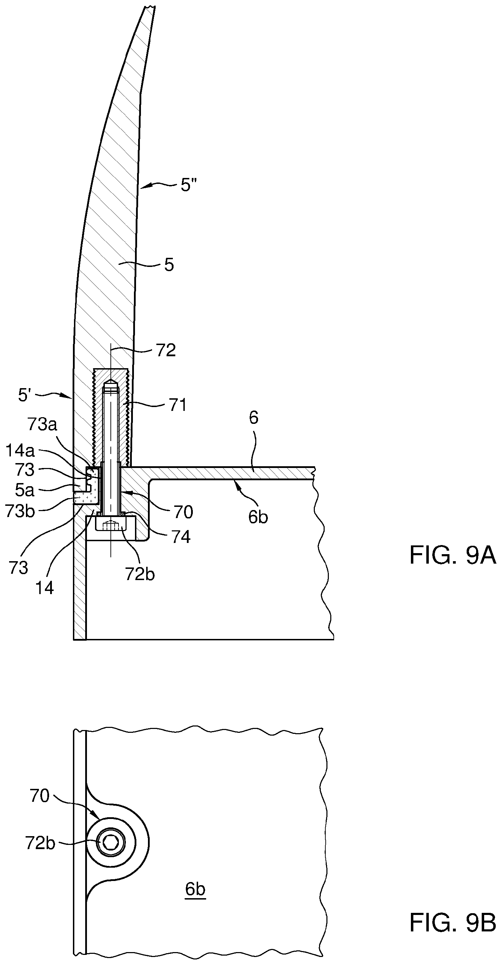

The outboard engine 1 further includes a cowling 5 forming a top cover of the chamber 7. The cowling 5 may, for example, be dome shaped as shown in Fig. 1 or may have another shape, such as a box or cylinder. The cowling 5 can be made from various materials including metal(s) and/or synthetic materials such as plastic(s) and/or composites, etc. The cowling 5 can be fabricated by any suitable process, including but not limited to an injection molding process, such as a high pressure permanent molding technology, or a blow molding or thermoforming process. Optionally, the cowling 5 may be integrally formed, for example as a one-piece shell. In other embodiments, the cowling may be composed from multiple modules that are coupled to each other. In a preferred embodiment, as shown in more detail referring to Fig. 9A, the cowling 5 is mounted to the adapter plate 6 at a sealed junction. Together, the cowling 5 and the adapter plate 6 form the sealed enclosure 100 enclosing the chamber 7 that accommodates the electric motor 2 and the invertor 4.

A bottom edge 5' of the cowling 5 may for example be received in a sealing engagement with a groove 14 that is provided on the adapter plate 6 as shown in Fig. 1, e.g. on the top surface 6a of said adapter plate 6. The seal between the cowling 5 and the adapter plate 6 may, for example, be created using a formed rubber ring located between the groove 14 and the bottom edge 5' of the cowling 5. The groove 14 in the adapter plate 6 also acts as an additional barrier against moisture. It is noted that, alternatively and/or additionally, further mounting elements can be used to provide a seal between the cowling 5 and the top surface 6a of the adapter plate 6.

In some embodiments, the cowling 5 is removably mounted on the adapter plate 6. For example, the cowling 5 may be bolted on the adapter plate 6, using an upper mounting assembly. The bolts may be received in a threaded hole within the bottom edge 5' of the cowling 5. As the cowling is removably mounted on the adapter plate 6 authorized personnel can periodically, for example once a year, check or replace all connections within the chamber 7. Specifically, authorized personnel may check the connections of electrical lines 16, 16' within the chamber 7. The electrical lines 16, 16' include power lines for delivering power from the external power source 11 to the invertor 4, as well as power lines for delivering the power from the invertor 4 to the electrical motor 2. Furthermore, the chamber 7 can include cables extending to or from control apparatus (not shown) for controlling the electrical motor 2 and/or invertor 4. For example, such a control apparatus operating through a control cable can regulate the output voltage, waveform, and/or current of the invertor 4, thereby tuning the power consumed by the electrical motor 2. Alternatively, and/or additionally, the cowling 5 may be provided with a fluid tight inspection window 15 for visually inspecting the interior of the chamber 7. If provided, the inspection window 15 is useful for monitoring electrical lines 16, 16' and/or liquid cooling lines 24, 24' therein. However, the cowling 5 may also be provided without an inspection window.

Generally, the sealed enclosure 100, and specifically the adapter plate 6, may be provided with input ports for the gastight and/or fluid tight passage of any component, including but not limited to electric power lines, the electric motor output shaft, and/or a cooling liquid interface through the adapter plate 6 and into or out of the chamber 7. In an alternative embodiment, an input port, an output port and/or a cooling liquid interface can be realized in a further module forming, preferably with the cowling and the adapter plate, the sealed enclosure. Such a further module may be implemented as an annular shaped intermediate module positioned between the adapter plate 6 and the lower edge 5' of the cowling.

In the illustrated embodiment, the power lines 9 that provide power from the external power source 11 to the invertor 4 enter the sealed enclosure 100 via input ports 8 that provide a fluid and/or air-tight passage for the electric power lines 9 through the adapter plate 6 and into the chamber 7. In the illustrated embodiment, the input ports 8 are provided in the adapter plate 6. However, as an alternative, the input ports may be provided in the cowling 5. Alternatively, a first input port may be provided in the cowling 5 while a second or any number of additional input ports may be provided in the adapter plate 6. Similar input ports may be provided in the sealed enclosure 100 for the fluid-tight passage of control cables. It is noted, however, that such control cables may be omitted in case the invertor 4 and/or electrical motor 2 are controlled wirelessly, for example via a Bluetooth connection, Wi-Fi, or the like. In some embodiments, the electric power lines 9 are arranged for transporting more than about 100 kW of electric power. For example, the electric power lines 9 may be arranged to conduct relatively high amperage currents such as more than 500 A, for example 600 A or 700 A. Further, in order to prevent a short circuit between pairs of electric cables having different potentials additional electrically isolating material and/or a sufficient distance may be provided between any two of these cables. In some embodiments, multiple electric power lines 9 may be provided to deliver power in parallel to the invertor 4 and/or electric motor 2. For example, if a single cable pair is arranged for transporting a current of 250 A, the capacity of the electric power lines may be doubled by providing four electric cables instead of two cables.

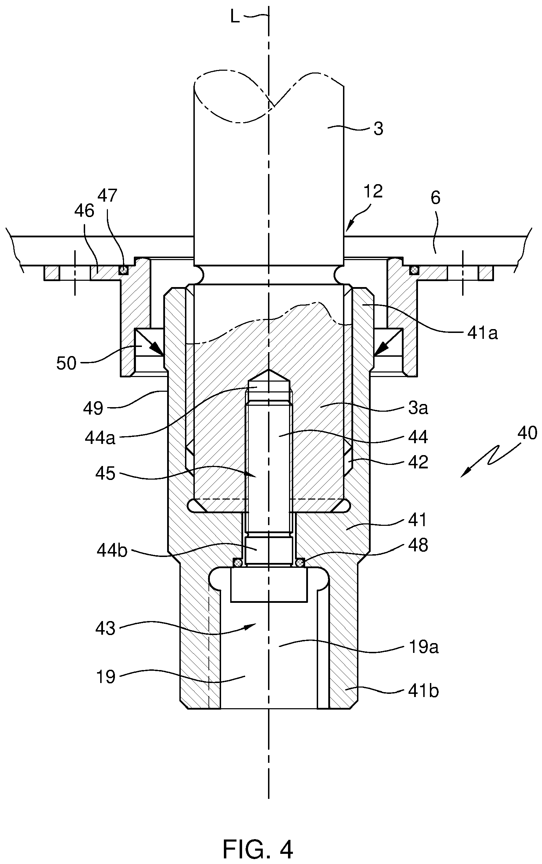

In the illustrated embodiment, the sealed enclosure 100 of the outboard engine arrangement 1 is provided with an output port including an opening 12 for fluid and/or gastight passage of the electric motor output shaft 3. In Fig. 1, the output port 12 is provided in the adapter plate 6. Fluid-tight passage through the adapter plate 6 may be accomplished in any manner including but not limited to the use of one or more bushings, sealed bearings, O-rings, gaskets or similar structures made, for example, from rubber material or another elastic material. However, in the illustrated embodiment, the fluid and/or gastight characteristics of the output port are realized by a coupler 40 described in more detail referring to Fig. 4.

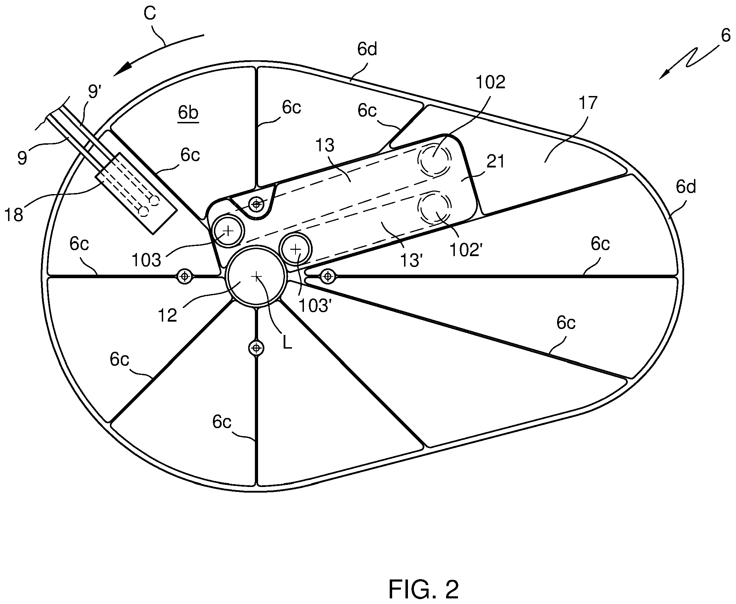

As shown in Fig. 1, the sealed enclosure 100 is further provided with a cooling liquid interface described in more detail referring to Fig. 2, for exchanging a cooling liquid in a gastight and/or fluid tight manner from and towards the chamber 7. In the illustrated embodiment an ingoing cooling liquid channel 13 and an outgoing cooling liquid channel 13' are provided in the cooling liquid interface. At the chamber side, the ingoing and outgoing channels 13, 13' are connected to liquid cooling lines 24, 24' to cool the invertor 4, the electric motor 2 and/or, optionally, the electric lines 16, 16'. The pump unit 35 is arranged to pump the cooling liquid towards and from the chamber 7. The pump unit 35 may be located inside the chamber 7, as shown in Fig. 1, or outside the chamber 7. It is further noted that the cooling liquid channels 13, 13' may be part of an open or closed liquid cooling system. In the former case, the cooling liquid may be sea, lake or river water; in the latter case, the cooling liquid may a selected heat transfer fluid, for example, a glycol water mixture or another cooling liquid that may be indirectly cooled by environmental water.

In certain embodiments, the top surface 6a of the adapter plate 6 has a standardized footprint providing for modular construction and the relatively easy mounting and interchange of parts, including but not limited to the motor 2, the invertor 4, the electric lines 16, 16' and/or tubes or hoses connected to the cooling liquid channels 13, 13. A standardized adapter plate 6 footprint is especially advantageous for electrical motors, such as motor 2, since the diameter of these motors can be made the same for different maximum power ratings. Thus, the adapter plate can be used for mounting or exchanging different electric motors having the same cross sectional dimension but different maximum power ratings. Several brands of motor suitable for implementation with an engine arrangement 1 vary only the axial dimension of the respective motor for different output power ratings. In other words, it is the length of the electric motor that changes as the maximum power output changes. Alternatively, the adapter plate 6 may be implemented without a standardized footprint.

Figure 2 shows a bottom view of the adapter plate 6 of the outboard engine arrangement 1 illustrated in Fig. 1. The adapter plate 6 has an opening 12 for receiving the output shaft 3 of the electric motor 2, the opening thus serving as an output port for fluid tight passage of said output shaft 3 from the chamber 7, as described in more detail referring to the coupler 40 shown in Figure 4. The adapter plate 6 shown in Fig. 2 is an exemplary implementation of the supporting structure for an outboard engine mentioned above. The adapter plate 6 shown in Fig. 2 includes a generally planar deck 17 having ribs 6c extending from the bottom side 6b of the plate downwardly, transverse to the plane P defined by the adapter plate 6, and generally parallel to the longitudinal axis L of the output shaft 3. Further, the adapter plate 6 includes an exterior rib or rim 6d defining a contour of the plate in a circumferential direction C around the longitudinal axis L. In the illustrated embodiment, the contour has a mainly oval shape. However, generally, the contour may have other shapes such as an ellipse, a circle, another curved contour or a polygon. The exterior rim 6d extends downwardly from the bottom surface 6b, mainly parallel to the other ribs 6c.

The deck 17 generally extends from the opening 12 to the exterior rim 6d, forming the mainly flat bottom side 6b of the plate 6, with discrete segments being defined by the ribs 6c. In some embodiments, plate 6 is integrally formed. One specific portion of the deck 17, defines an interface 21, typically located adjacent the opening 12. The interface 21 defines a region where a cooling liquid may be exchanged into and out of the chamber 7 in a sealed manner. The interface 21 integrated in the adapter plate 6 includes the ingoing cooling liquid channel 13 and the outgoing cooling liquid channel 13' mentioned above with reference to Fig. 1. Typically, the interface 21 includes an interior inlet opening 102 and an interior outlet opening 102', both opening into the chamber 7. Typically, the interface 21 also includes an exterior inlet opening 103 and an exterior outlet opening 103' both opening away from the chamber 7. The ingoing cooling liquid channel 13 runs from the exterior inlet opening 103 to the interior inlet opening 102, and the outgoing cooling liquid channel 13' runs from the exterior outlet opening 103' to the interior outlet opening 102'. In the illustrated embodiment, the exterior inlet opening 103 and the exterior outlet opening 103' are located near the opening 12 so as to connect to a heat exchanger located below the adapter plate 6 concentric to the longitudinal axis L of the output shaft 3 or to another device providing input / output cooling liquid such as direct cooling using fresh water or seawater. The illustrated interface 21 has a mainly rectangular shape, but in other embodiments, the interface 21 may have another shaped, e.g. a triangular shape or another polygon shape. The deck 17 including the interface 21 forms a pattern of regions adjoining each other forming the bottom side 6b of the generally flat plate 6.

It is noted that the adapter plate 6 can be implemented without a deck 17 and rib 6c/rim6d configuration. For example, the adapter plate 6 could be implemented with a solid, honeycomb, hollow, or other structure for supporting electric motors of various sizes and weights.

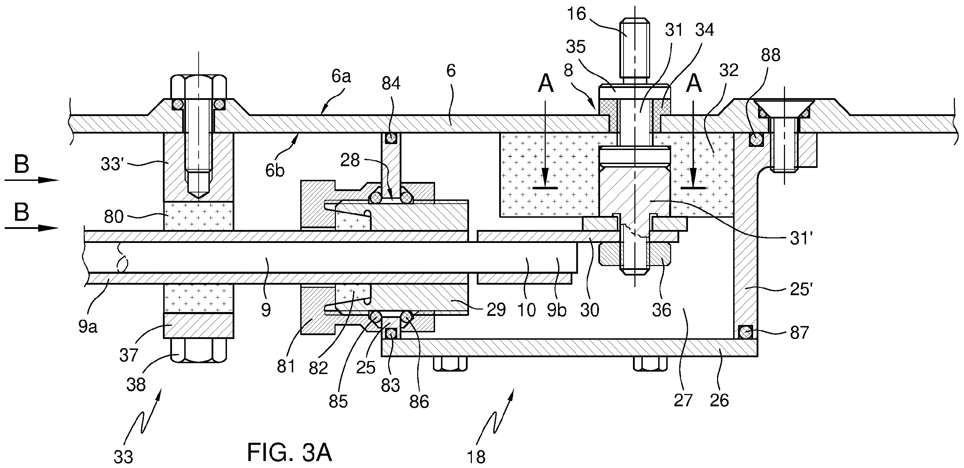

Figure 2 further shows a cable connector box 18 mounted to the bottom side 6b of the plate 6 as described below referring to Figures 3A-C.

Figure 3A shows a cross-sectional view of a cable connector box 18 mounted on the adapter plate 6 shown in Fig. 2. The cable connector box 18 serves to provide functional reliability and safety, connecting the power lines or DC lines from the DC power source, such as a fuel cell or battery, to the invertor 4 positioned underneath the cowling 5. The illustrated cable connector box 18 has a mainly rectangular shape having side walls 25, 25' mounted to the plate bottom side 6b, e.g. in a sealed configuration using O-ring seals 84, 88. The illustrated cable connector box 18 further includes a removable cover 26 closing the interior 27; in some cases, this cover might seal the interior 27 in a gastight and fluid tight manner, e.g. using O-ring seals 83, 87. Providing a gas and liquid-tight seal between the cable connector box 18 and the adapter plate 6 and environment promote safety and reliability. In the illustrated embodiment, a first side wall 25 is provided with at least one pair of cable openings 28 for the sealed passage of corresponding electric power lines 9 connected to a DC power source 11, while a second side wall 25' opposite to the first side wall 25 has no cable openings. The power lines 9 will typically include copper wires or other suitable conducting elements having cross sectional dimensions sufficient to conduct high power currents up to e.g. about 500 A at about 650 V. Thus, in some embodiments the power lines 9 will be sized to conduct up to or more than about 100 kW. The power lines 9 each include an insulating layer 9a. The cable openings 28 may be sealed using a sealing and connection structure 29 to prevent or minimize gas or liquid ingress to the interior 27 of the box 18. One representative sealing and connection structure 29 includes interior and exterior O-ring seals 85, 86 and an exterior side clamping element 81 clamping a rubber ring 82 around the insulating layer 9a of the electric power lines 9. The cable connector box 18 further includes cable pins 31 traversing the adapter plate 6 via input ports 8 and cable shoes 30 interconnecting power line ends 9b protruding into the box interior 27 to said cable pins 31. The cable pins 31 are fixedly mounted to the box 18 and/or the adapter plate 6 using electrically isolating material such as a rubber block 32 vulcanized into the interior 27 of the box 18 thus forming O-ring housing seals, and a nut 36 clamping the cable shoes 30 to a lower cable pin portion 31' of the cable pin 31, said lower cable pin portion 31' traversing the rubber block 32. The cable pins 31 are electrically connected to electrical lines 16, 16' within the chamber 7 for delivering power to the invertor 4. Thus, the power lines 9 connect the DC power source 11 to the invertor 4 via an electrically uninterrupted connection 10 in the connector box 18 forming a continuous conducting structure. The input ports or openings 8 in the adapter plate 6 being traversed by the cable pins 31 are sealed by providing a washer 35 carried on top of the cable pin 31 and an electrically insulating seal material 34 that may be compressed and clamped in the openings 8 by said washer 35 when applying a cable shoe like said cable shoe 30 above and corresponding fastening nut like the fastening nut 36 above on top of the pin 31 forcing the washer 35 towards the electrically insulating seal material 34.

The illustrated cable connector box 18 is mounted on the adapter plate 6. In other embodiments however, the cable connector box 18 may be mounted elsewhere. The cable connector box 18 may be arranged for connecting a single pair of power lines or multiple pairs of power lines, e.g. two, three, four, or more than four pairs of power lines. Further, a multiple number of cable connector boxes may be utilized. Also control lines, other wires, or other cables may traverse the adapter plate 6 using a cable connector box, such as box 18.

Figure 3A further shows an optional mounting element 33, also referred to as a cable strain relief fixture, mounted to the adapter plate 6 via a bolt construction 38, and engaging the power lines 9 for aligning the lines 9 to the respective cable openings 28 in the box 18. The mounting element 33 includes rubber rings 80 surrounding the insulating layer 9a of the electric power lines 9, respectively. Further, the mounting element 33 includes an upper portion 33' mounted to the adapter plate 6, via the bolt construction, and a supporting element 37 mounting the rubber rings 80 to said upper portion 33'.

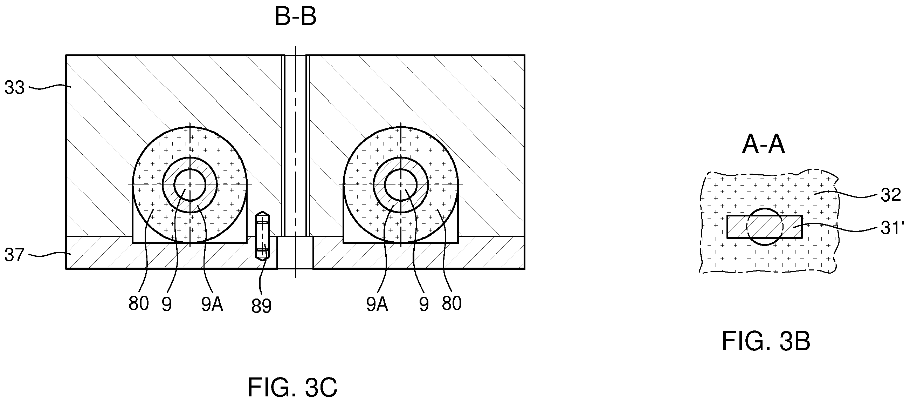

Figure 3B shows a schematic cross-sectional view of the cable pin of the cable connector box 18 along cross section A shown in Fig. 3A. The lower cable pin portion 31' of the cable pin 31 traversing the rubber block 32 is not rotationally symmetric, but mainly rectangular shaped in cross sectional view along its longitudinal axis, thus providing an anti-rotation provision for the cable pin 31 so as to remain mainly stationary during assembly and/or de-assembly of the cable connector box 18 to the mounting plate 6.

Figure 3C shows a schematic side view of the mounting element 33 shown in Fig. 3A, alongside view B. The mounting element is traversed by a pair of electric power lines 9. In the illustrated embodiment, the supporting element 37 is mounted to the upper portion 33 of the mounting element via a dowel pin 89

During attachment or de-attachment of the power lines 9 the connector box cover 26 and the supporting element 37 of the strain relief fixture 33 can be removed, however without removal of the cowling 5.

Figure 4 shows a cross-sectional view of a coupler 40 of the outboard engine arrangement 1 shown in Fig. 1 or a supporting structure described above. The coupler 40 provides a sealed coupling between the output shaft 3 of the electric motor 2 to a corrosion resistant driving shaft 19, also referred to as a transmission input shaft or an outboard drive shaft, driving a propeller for outboard propulsion through a bevel gear transmission. By providing the coupler, the outboard engine arrangement 1 can be utilized with boats sailing offshore in salt water, even if the output shaft 3 of the electric motor is vulnerable to corrosion.

The coupler 40 has a mainly cylindrical structure 41 made from a corrosion resistant material such as stainless steel, aligned with the output shaft 3 of the electric motor 2. Typically, the output shaft 3 will pass through the opening or output port 12 of the adapter plate 6 with shaft end 3a extending downwardly. The cylindrical coupler structure 41 has an upper end 41a and a lower end 41b. Typically, the upper end 4a defines an upper cavity 42 and the lower end 4b defines a lower cavity 43, with the upper cavity 42 and the lower cavity 43 being concentric and aligned with the output shaft 3. Either one or both of the upper cavity 42 and lower cavity 43 may be provided with a splined inner surface. Further, the cylindrical coupler structure 41 includes a channel 45 extending between the upper and the lower cavity 42, 43, also concentric with the output shaft 3.

The upper cavity 42 of the coupler 40 receives the output shaft end 3a of the electric motor 2. The optional splined inner surface of the upper cavity 42 engages with a corresponding splined outer surface on the output shaft end 3a. The lower cavity 43 of the coupler 40 receives an upper end 19a of the corrosion resistant driving shaft 19 also aligned with the output shaft 3. The corrosion resistant driving shaft 19 may include stainless steel and/or another corrosion resistant material. Similar to the upper cavity coupling structure, the optional splined inner surface of the lower cavity 43 engages with a corresponding splined outer surface of the driving shaft upper end 19a. The coupler 40 further includes a connector bolt 44 traversing through the channel 45, the connector bolt 44 having an upper end 44a mounted into the output shaft end 3a and a lower end 44b extending into the lower cavity 43. The connector bolt 44 holds the coupler 40 to the output shaft 3 of the electric motor 2.

The output shaft 3 and the outboard drive shaft 19 are thus received in the respective cavities 42, 43 in a rotationally fixed manner, such that the shafts 3, 19 engage the coupler 40 in a circumferential, rotational direction C around the longitudinal axis L by the splined engaging surfaces of the cavities 42, 43.

The coupler 40 further includes an annular shaped seal carrier 46, e.g. made from Aluminum or another corrosion resistant material, mounted to the bottom side 6b of the electric motor plate 6, and sealed against said plate 6 e.g. using an O-ring 47 or similar structure. Further, an O-ring 48 can be applied as a seat around the connector bolt 44 to seal the upper cavity 42. The coupler 40 also includes a radial seal ring 50 located radially between the radial exterior surface 49 of the mainly cylindrical structure 41 and the annular shaped seal carrier 46. Here, the mainly cylindrical structure 41 of the coupler 40 provides a sealing surface for the radial seal ring 50.

In alternative embodiments, the outboard engine arrangement 1 can be provided without the above described coupler 40. A coupler may not be desired for boats sailing in fresh waters only, or where the output shaft 3 of the electric motor 2 itself is corrosion resistant. In the latter case the coupler may be integrated into the drive shaft.

According to an aspect, a supporting structure for an outboard engine is provided, comprising an adapter plate for supporting an electric motor having an output shaft for outboard propulsion, and for supporting an invertor for driving the electric motor, wherein the adapter plate is provided with an output port for fluid tight passage of the electric motor output shaft.

The supporting structure may include a corrosion resistant driving shaft that is coupled in a sealed engagement to the output shaft of the electric motor, preferably using a corrosion resistant coupler as described above with reference to Fig. 4. The supporting structure may also include a cowling for forming, together with the adapter plate, an enclosure enclosing a chamber that accommodates the electric motor and the invertor.

The adapter plate of the supporting structure can be provided as described above referring to Fig. 1-4. The adapter plate may include input ports for fluid tight passage by electric power lines connected to the invertor, preferably using a cable connector box as described above referring to Figs. 3A-C, and/or a cooling liquid interface for exchanging cooling liquid in a fluid tight manner towards and from the chamber accommodating the electric motor and the invertor., e.g. as described above referring to Fig. 2.

Figure 5 shows a schematic cross-sectional side view of an alternative outboard engine arrangement 1. Here, the invertor 4 is mounted on top of the electric motor 2, in the chamber 7 enclosed by the cowling 5 and the adapter plate 6.

Figure 6 shows a schematic perspective view of yet another alternative outboard engine arrangement 1. In some embodiments, more than one invertor may be provided, e.g. two or three invertors. Merely by way of example, in the embodiment shown in Fig. 6, a first invertor 4a is placed next to the electric motor 2, while a second invertor 4b is also placed next to the electric motor 2, at another circumferential position, e.g. opposite to the first invertor 4a, the first and second invertors 4a,b having the motor 2 located between them. Alternatively, a first invertor could be placed on top of the electric motor, as shown in Fig. 5, while a second invertor might be placed next to the electric motor, e.g. in a tilted orientation. In the embodiment shown in Fig. 6, electric lines 16' interconnect the invertors 4a,b to corresponding electric terminals or sockets 16"a,b on the electric motor 2 for driving said electric motor 2.

Typically, a single invertor configuration, as shown in Fig. 1 and Fig. 5, is applied for driving a relatively lower powered electric motor, having a power output of e.g. about 100 kW or 150 kW, while a double invertor configuration may be applied for driving a relatively higher powered electric motor, having a power output of, for example, about 200 kW or 300 kW.

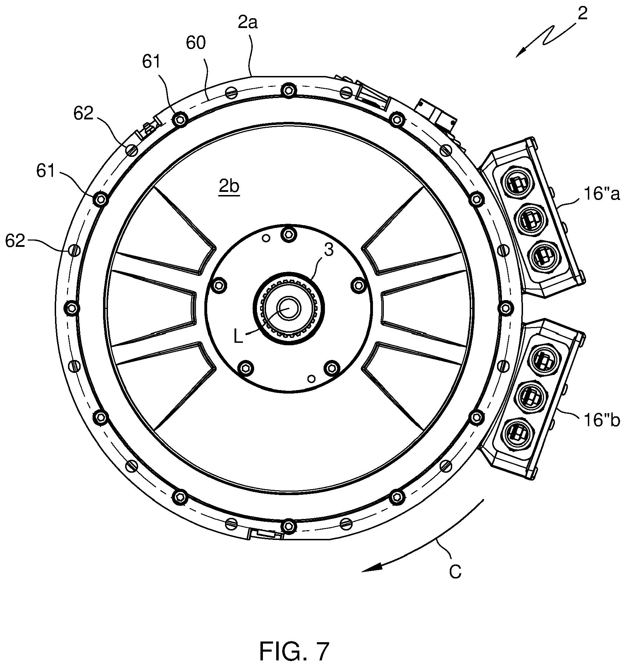

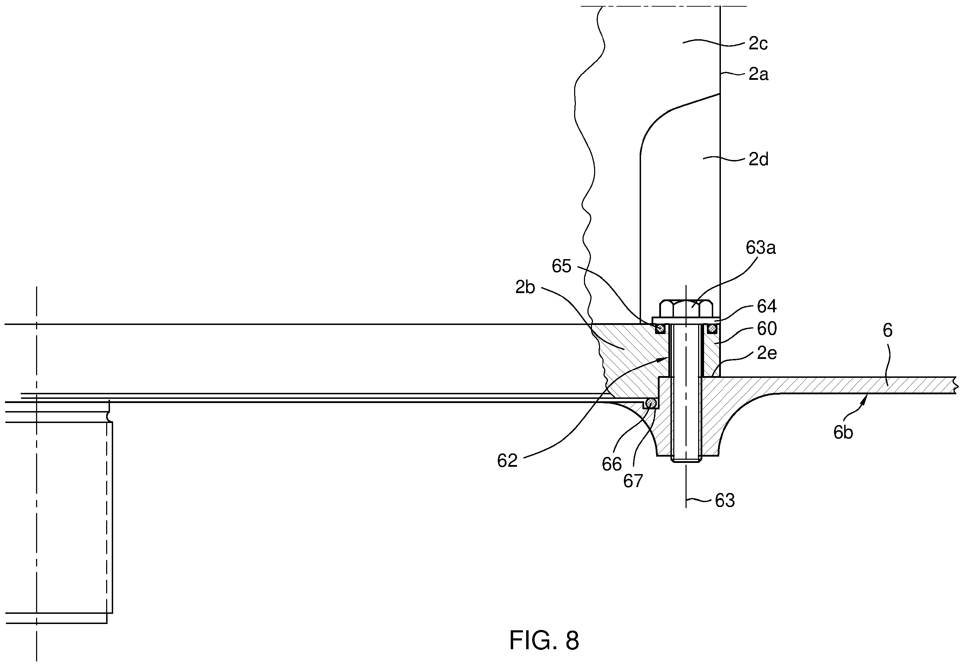

Figure 7 shows a schematic bottom view of the electric motor 2 in the outboard engine arrangement 1 shown in Fig. 6., including a cylindrical motor housing 2a and the electric terminals or sockets 16"a,b shown in Fig. 6 on the exterior surface 2a of a cylindrical motor housing 2c, see also Fig. 8, described *infra.* The electric motor 2 has a disc-shaped bottom plate 2b that is mounted to both the electric motor housing 2a and the adapter plate 6 via respective bolt constructions. In the shown embodiment, the bottom plate 2b is provided with an annular shaped exterior flange 60 having two concentric series of bolt openings 61, 62 that are mainly evenly distributed in a circumferential direction C around the shaft 3. As shown in Fig. 7, the individual bolt openings of the first and second series 61, 62 may alternate. In an assembled state, bolts protruding upwardly through corresponding bolt openings of the first series 61 are mounted to the electric motor housing 2c, for assembling the electric motor, while other bolts protruding downwardly through corresponding bolt openings of the second series 62 are mounted to the adapter plate 6, for mounting the electric motor to the adapter plate 6, as illustrated in more detail referring to Fig. 8.

Figure 8 shows a first schematic partial cross-sectional side view of the outboard engine arrangement 1 shown in Fig. 6 depicting one method of how the electric motor 2 may be mounted to the adapter plate 6. Here, a bolt 63 extends through a corresponding bolt opening of the second series 62 in the annular shaped exterior flange 60 of the bottom plate 2b of the electric motor 2, and protrudes into a corresponding opening of the adapter plate 6. As an example, twelve M10 bolts 63 could be applied extending through the second series openings 62 that are mainly evenly distributed in the circumferential direction C around the shaft 3. The bolts 63 may have any suitable dimension and any suitable number of bolts 63 may be utilized, e.g. more than twelve sixteen or twenty, in any suitable pattern. The bolt 63 may be fixed using a nut, at the bottom side 6b of the adapter plate 6, for fixedly connecting the bolt 63 such that the electric motor 2 is firmly mounted to the adapter plate 6. The illustrated bolt 63 has a shoulder 63a, 64 pressing an O-ring 65 against the bottom plate flange 60, for sealing purposes. A further O-ring 66 may be applied between the bottom plate 2b of the electric motor 2 and the adapter plate 6, e.g. in a recess 67 proximate to the bolt opening 62, at a radial inner side thereof. In the illustrated embodiment, the cylinder housing 2c is provided with recesses 2d near corresponding bolt openings of the second series 63 to facilitate assemblage of the bolts 63, as also depicted in Fig. 6. Further, a gasket 2e may be provided between the bottom plate flange 60 and the adapter plate 6.

Figure 9A shows a second schematic partial cross-sectional side view of the outboard engine arrangement 1 shown in Fig. 1, depicting one method of how the cowling 5 may be a mounted to the adapter plate 6 to provide a sealed fit. The bottom edge 5' of the cowling 5 is received in a groove or staggered portion or rim 14 extending on the top surface 6a of the adapter plate 6, in a circumferential direction C around the longitudinal axis L of the output shaft 3. The groove or staggered portion or rim 14 is provided with bolt openings 70, which in one non-limiting embodiment are evenly distributed in the circumferential direction C, e.g. with bolt spacing ranging from about 100 mm to about 150 mm offset. Also, the cowling bottom edge 5' is provided with mounting elements at corresponding locations in the circumferential direction C. In the illustrated embodiments, said mounting elements are implemented as metal inserts 71 that are molded in said cowling edge 5', the metal inserts being preferably made from a metal such as brass, aluminum or stainless steel. In an assembled state, bolts 72, e.g. M6 bolts or similar, protrude from a bottom side 6b of the adapter plate 6, through the bolt openings 71 into the corresponding metal inserts 71 of the cowling 5, thereby fixedly mounting said cowling 5 to said adapter plate 6. The bolts 72 have a bolt shoulder 72b resting, via a sealing O-ring 74, against a bottom side 6b of the adapter plate 6. Further, a rubber seal 73 is applied between the cowling 5 and the groove or staggered portion or rim 14 of the adapter plate 6. Preferably, the rubber seal 73 includes an upwardly extending portion 73a, positioned between a lower tip 5a of the cowling 5 on the one hand, and the adapter plate 6, e.g. a downwardly extending flange portion 14a of the staggered rim portion 14 on the other hand. Further, the rubber seal 73 includes a radially outwardly extending portion 73b supporting the lower tip 5a of the cowling 5. In some embodiments, the upwardly extending seal portion 73a and the radially outwardly extending portion 73b form a single integrated rubber seal 73. As shown in Fig. 9A, a radial inner surface 5" of the cowling 5 is slightly tilted, curved, or otherwise formed to facilitate mold removal.

Figure 9B shows a first schematic partial cross-sectional bottom view of the outboard engine arrangement 1 shown in Fig. 9A. Here, the bolt shoulder 72b is visible protruding from the bottom side 6b of the adapter plate 6, through the bolt opening 70 and into the metal insert 71 in the bottom edge 5' of the cowling 5.

This disclosure is not restricted to the embodiments described above. It will be understood that many variants are possible.

These and other embodiments will be apparent for the person skilled in the art and are considered to fall within the scope of the invention as defined in the following claims. For the purpose of clarity and a concise description features are described herein as part of the same or separate embodiments. However, it will be appreciated that the scope of the invention may include embodiments having combinations of all or some of the features described.

## Claims

1. An outboard engine arrangement, comprising an electric motor having an output shaft for outboard propulsion, and an invertor for driving the electric motor, the engine arrangement further comprising an enclosure enclosing a chamber that accommodates the electric motor and the invertor, wherein the enclosure is sealed.

2. An outboard engine arrangement according to claim 1, wherein the sealed enclosure is fluid tight and/or gastight.

3. An outboard engine arrangement according to any of the preceding claims, wherein the sealed enclosure further includes an adapter plate supporting the electric motor and the invertor.

4. An outboard engine arrangement according to any of the preceding claims, wherein the sealed enclosure includes a cowling forming a top cover of the chamber.

5. An outboard engine arrangement according to claim 4, wherein the cowling is mounted to the adapter plate, the cowling and the adapter plate forming the sealed enclosure.

6. An outboard engine arrangement according to claim 5, wherein the adapter plate includes a groove receiving a bottom edge of the cowling.

7. An outboard engine arrangement according to any of the preceding claims 4-6, wherein the cowling is formed as a one piece shell.

8. An outboard engine arrangement according to any of the preceding claims 4-7, wherein the cowling is removably mounted on the adapter plate.

9. An outboard engine arrangement according to any of the preceding claims 4-8, wherein the cowling includes a fluid tight inspection window for inspecting electrical lines and/or liquid cooling lines in the chamber.

10. An outboard engine arrangement according to any of the preceding claims, wherein the sealed enclosure is provided with input ports for fluid tight passage by electric power lines connected to the invertor.

11. An outboard engine arrangement according to claim 10, wherein the electric power lines are arranged for transporting more than about 100 kW electric power.

12. An outboard engine arrangement according to any of the preceding claims, wherein the sealed enclosure is provided with an output port for fluid tight passage of the electric motor output shaft.

13. An outboard engine arrangement according to any of the preceding claims, wherein the sealed enclosure is provided with a cooling liquid interface for exchanging cooling liquid in a fluid tight manner.

14. An outboard engine arrangement according to any of the preceding claims, wherein at least one invertor has a tilted orientation relative to the electric motor.

15. An outboard engine arrangement according to any of the preceding claims 3-14, wherein the adapter plate includes a standardized footprint for modular construction.
